(19) Europäisches Patentamt
European Patent Office
Office européen des brevets

(11) **EP 4 733 898 A1**

(12) **EUROPEAN PATENT APPLICATION**

(43) Date of publication:
**29.04.2026 Bulletin 2026/18**

(21) Application number: **24306799.8**

(22) Date of filing: **25.10.2024**

(51) International Patent Classification (IPC):
*G06F 3/01* (2006.01)     *A63F 13/285* (2014.01)
*G06N 7/01* (2023.01)     *H04N 21/84* (2011.01)
*H04N 21/845* (2011.01)     *H04N 21/85* (2011.01)
*H04N 21/235* (2011.01)     *H04N 21/236* (2011.01)
*H04N 21/435* (2011.01)

(52) Cooperative Patent Classification (CPC):
**G06F 3/016; A63F 13/28; G06N 3/044; G06N 7/01;
H04N 21/235; H04N 21/435; H04N 21/8456;**
A63F 2300/8082; H04N 21/23614; H04N 21/43074;
H04N 21/4348

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• LECUYER, Gurvan
  **35000 RENNES (FR)**
• GALVANE, Quentin
  **35235 THORIGNE-FOUILLARD (FR)**
• GUILLOTEL, Philippe
  **35770 VERN SUR SEICHE (FR)**

(74) Representative: **Vossius & Partner
Patentanwälte Rechtsanwälte mbB
Siebertstraße 3
81675 München (DE)**

(54) **DEFINING HAPTIC DATA USING PROBABILISTIC SPACE**

(57) Some embodiments of a method may include: obtaining information describing a probabilistic space; generating a probabilistic haptic data structure corresponding to the probabilistic space, wherein the probabilistic haptic data structure comprises identification of a distribution type associated with the probabilistic space and a set of one or more parameters associated with the probabilistic space; and storing the probabilistic haptic data structure in a memory location.

FIG. 11

(Cont. next page)

OBTAINING INFORMATION DESCRIBING A PROBABILISTIC SPACE ⟿1202

GENERATING A PROBABILISTIC HAPTIC DATA STRUCTURE CORRESPONDING TO THE PROBABILISTIC SPACE, WHEREIN THE PROBABILISTIC HAPTIC DATA STRUCTURE INCLUDES IDENTIFICATION OF A DISTRIBUTION TYPE ASSOCIATED WITH THE PROBABILISTIC SPACE AND A SET OF ONE OR MORE PARAMETERS ASSOCIATED WITH THE PROBABILISTIC SPACE ⟿1204

STORING THE PROBABILISTIC HAPTIC DATA STRUCTURE IN A MEMORY LOCATION ⟿1206

# FIG. 12

⟿1200

**Description**

**INCORPORATION BY REFERENCE**

The present application incorporates by reference in their entirety the following applications: U.S. Provisional Patent Application Serial No. 63/526,954, entitled "DASH SIGNALING FOR ADAPTIVE STREAMING OF HAPTICS MEDIA" and filed July 14, 2023 ("'954 application"); International Patent Application Serial No. PCT/US2024/037634, entitled "DASH SIGNALING FOR ADAPTIVE STREAMING OF HAPTICS MEDIA" and filed July 11, 2024 ("'634 application"); and European Patent Application Serial No. TBD, entitled "NOISE BAND FOR MPEG HAPTIC FORMAT" and filed October 25, 2024.

**BACKGROUND**

The present application is related to haptic coding.

**SUMMARY**

An example method in accordance with some embodiments may include: obtaining information describing a probabilistic space; generating a probabilistic haptic data structure corresponding to the probabilistic space, wherein the probabilistic haptic data structure comprises identification of a distribution type associated with the probabilistic space and a set of one or more parameters associated with the probabilistic space; and storing the probabilistic haptic data structure in a memory location.

For some embodiments of the example method, the identification of the distribution type comprises a probabilistic density function (PDF), and the distribution type is one of a set of types comprising continuous uniform, normal, cauchy, exponential, and other.

For some embodiments of the example method, a format of the set of one or more parameters is set based on the probabilistic density function.

For some embodiments of the example method, the probabilistic space applies to a whole MPEG haptic data structure.

For some embodiments of the example method, the probabilistic space applies to a perception level of an MPEG haptic data structure.

For some embodiments of the example method, the probabilistic space applies to a channel level of an MPEG haptic data structure.

For some embodiments of the example method, the probabilistic space applies to a band level of an MPEG haptic data structure.

For some embodiments of the example method, the probabilistic space applies to an effect level of an MPEG haptic data structure.

For some embodiments of the example method, the probabilistic space applies to a keyframe level of an MPEG haptic data structure.

For some embodiments of the example method, the probabilistic space applies to two or more levels of an MPEG haptic data structure.

Some embodiments of the example method may further include synthesizing a haptic signal associated with the probabilistic haptic data structure.

For some embodiments of the example method, the probabilistic haptic data structure is associated with an avatar.

For some embodiments of the example method, the probabilistic haptic data structure complies with a JSON-based structure scheme.

For some embodiments of the example method, the probabilistic haptic data structure complies with an MPEG-based haptic standard.

An example apparatus in accordance with some embodiments may include: a processor; and a memory storing instructions operative, when executed by the processor, to cause the apparatus to perform the any one of the methods listed above.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a system diagram illustrating an example set of interfaces for a system according to some embodiments.

FIG. 2 is a data packaging diagram showing an example MPEG haptics data structure according to some embodiments.

FIG. 3 is a signal structure diagram illustrating an example composition of a haptic signal according to some embodiments.

FIG. 4 is a signal structure diagram showing example haptic data stored on two channels according to some embodiments.

FIG. 5 is a process diagram illustrating an example MPEG haptic codec architecture process according to some embodiments.

FIG. 6 is a graph illustrating an example 2-dimensional haptic effect .

FIG. 7 is a graph illustrating an example rendering of a haptic signal.

FIG. 8 is a graph illustrating an example haptic effect according to some embodiments.

FIG. 9 is a graph illustrating an example first haptic signal output according to some embodiments.

FIG. 10 is a graph illustrating an example second haptic signal output according to some embodiments.

FIG. 11 is a graph illustrating an example third haptic signal output according to some embodiments.

FIG. 12 is a flowchart illustrating an example process for generating a probabilistic haptic data structure according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

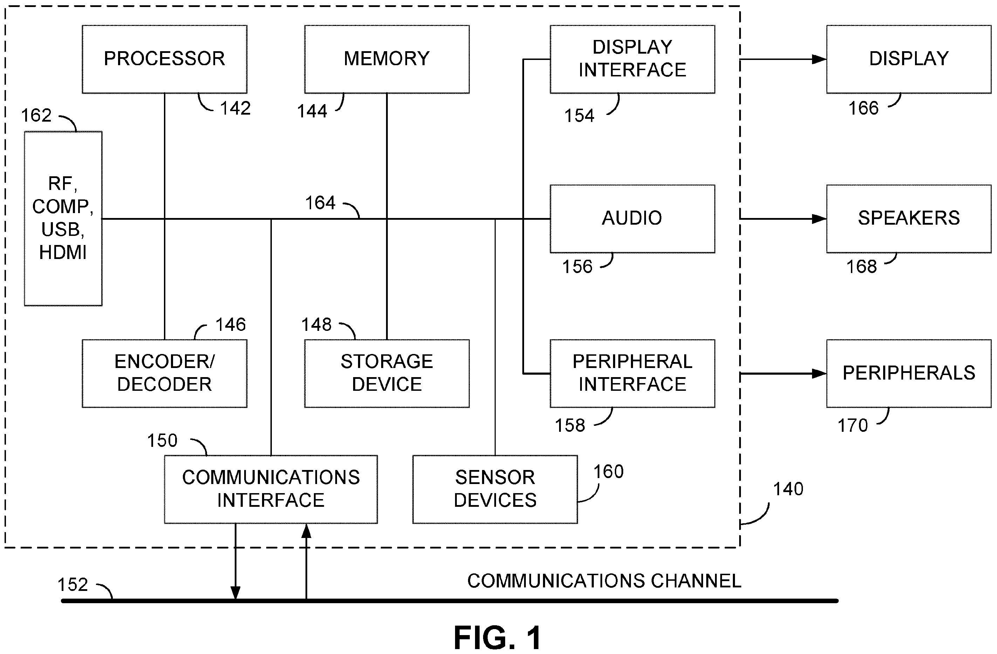

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.
The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

With the on-going MPEG standardization process on the coded representation of haptics, a new haptic coding format is being defined. A coding format and encoder are described herein for some embodiments.

## MPEG Haptic Data Structure

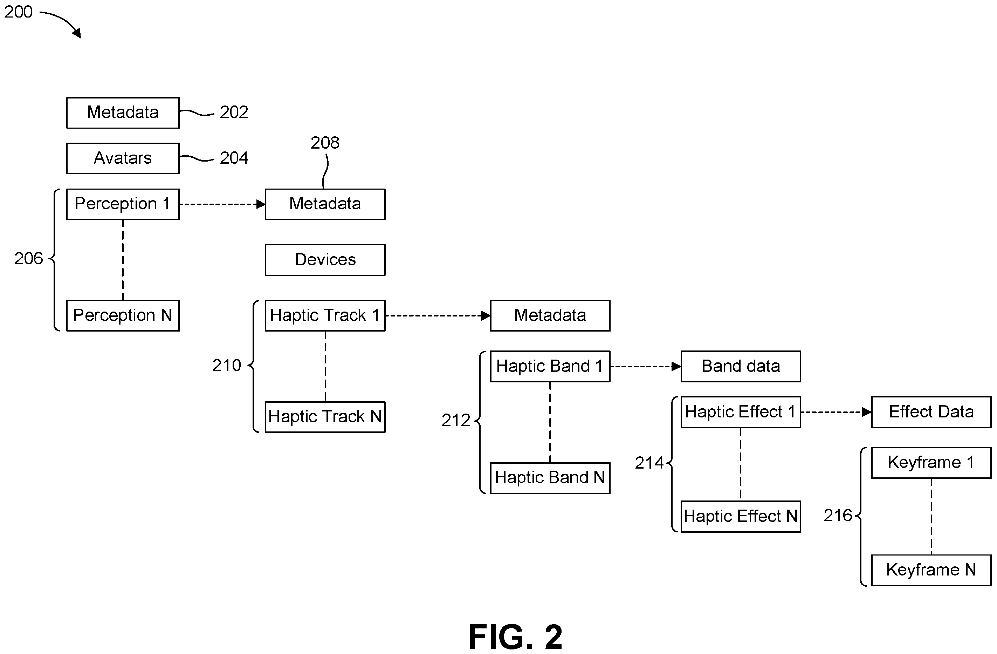

FIG. 2 is a data packaging diagram showing an example MPEG haptics data structure according to some embodiments. FIG. 2 shows an example haptics data hierarchy 200. The data structure of two haptic codec formats follows the hierarchical organization illustrated in FIG. 2.

The highest level of the structure describes the entire haptic experience defined in the file or stream. This highest level contains some high-level metadata information 202 regarding the overall haptic experience and provides a list of avatars 204 and/or body representations that may be referenced to specify a desired location of haptic stimuli on the body. The haptic data itself is described through a list of perceptions 206. These perceptions 206 correspond to haptic signals associated with specific perception modalities (e.g., vibration, force, position, velocity, and temperature).

In addition to perception-specific metadata 208, a perception may include a list of channels (or tracks 210) in which the data is decomposed into frequency bands. Each band 212 defines part of the signal in a given frequency range. The bands 212 are described with a list of haptic effects 214, each including a list of keyframes 216. The haptic signal in a channel may be reconstructed by combining the data in the different bands (e.g., by adding high and low frequency bands).

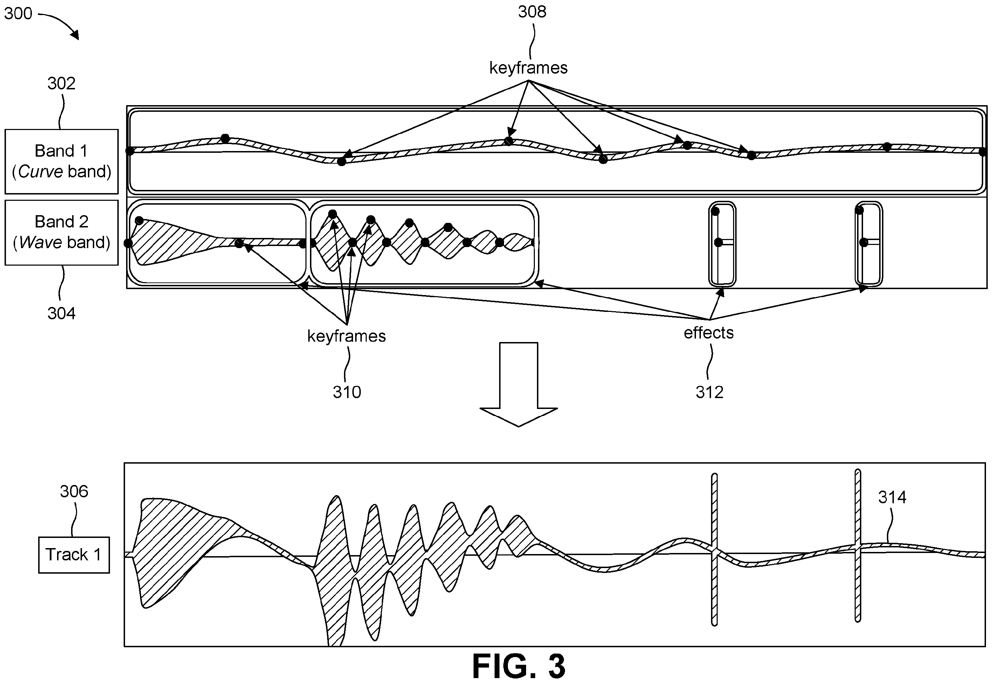

FIG. 3 is a signal structure diagram illustrating an example composition of a haptic signal according to some embodiments. A perception contains a list of tracks where the data is decomposed into frequency bands. Each band defines part of the signal in a given frequency range. The band itself is described with a list of haptic effects 312 each containing a list of keyframes 308, 310. The haptic signal in a track, such as Track 1 (306) of the example scenario 300 shown in FIG. 3, may be reconstructed by combining the data in the different bands. FIG. 3 illustrates how a haptic signal 314 may be decomposed into two frequency bands 302, 304. By adding the high and low frequency bands 302, 304, the original signal 314 for an example Track 1 (306) may be reconstructed.

For some embodiments, the format has four types of haptic bands: transient bands, curve bands, vectorial bands, and wavelet bands. Each band is composed of a series of "effects" each defined by a list of "keyframes". The data contained in the effects 312 and keyframes 308, 310 is interpreted differently for different types of haptic bands and encoding modalities.

For a transient band, each effect stores a set of keyframes defining a position, an amplitude, and a frequency. A keyframe represents a transient event. For a curve band, each effect stores a set of keyframes defining a position and an amplitude. The keyframes represents the control points of the curve. The type of interpolation function (cubic or linear) used to generate the band is specified in the metadata of the band. For vectorial bands, the effect stores a set of keyframes defining a position, an amplitude and a frequency. For wavelet bands, the effect stores the contents of one wavelet block binary stream.

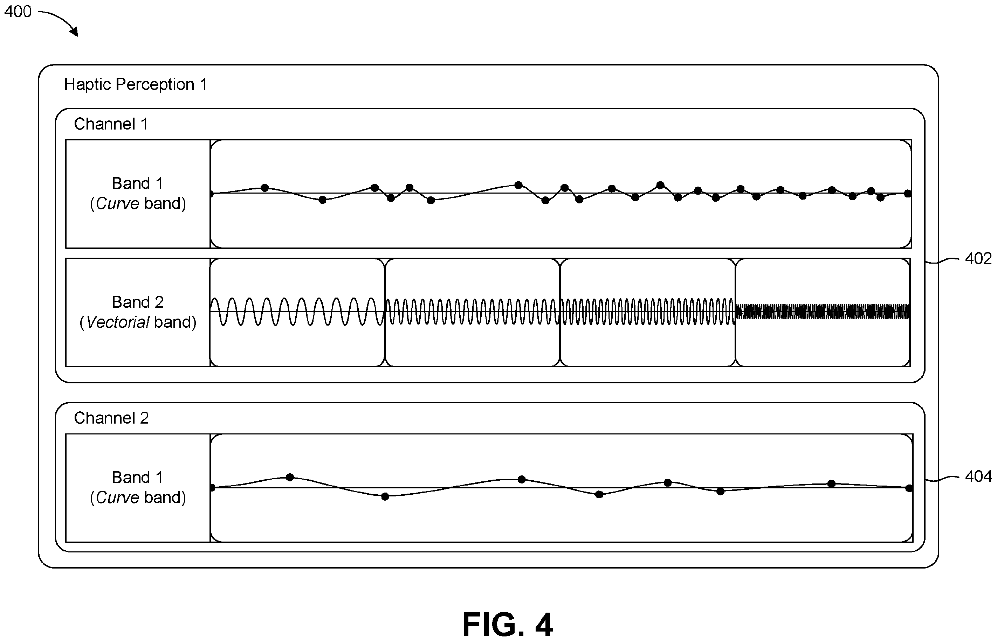

FIG. 4 is a signal structure diagram showing example haptic data stored on two channels according to some embodiments. FIG. 4 gives an example of haptic data containing a single haptic perception 400 with two channels 402, 404. The first channel 402 contains a curve band with a single effect and a vectorial band with 4 effects. The second channel 404 contains a single curve band.

## MPEG Codec

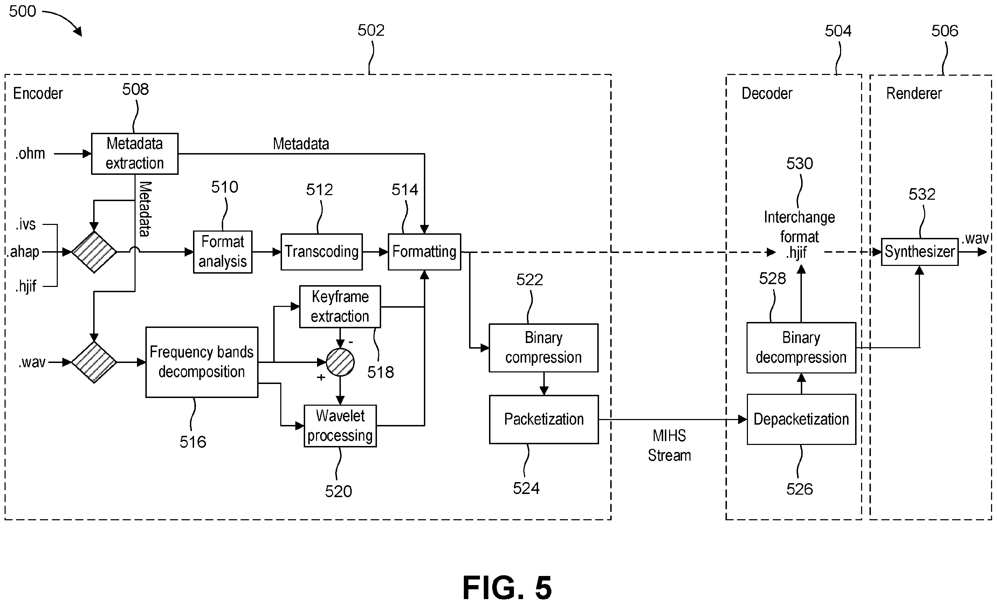

FIG. 5 is a process diagram illustrating an example MPEG haptic codec architecture process according to some embodiments. The overall architecture 500 of the agreed upon codec is illustrated in FIG. 5. The encoded signal may be exported either as a JSON (human readable) interchange format or as a compressed binary distribution format.

The encoding process 502 may take as input either descriptive haptics files (.ivs and .ahap) or waveform PCM files (.wav). The encoding of these two types of file formats follows two distinct approaches. For descriptive input files, the encoder 502 performs format analysis 510 to analyze the data and then a transcoding process 512 transcodes the data directly to the MPEG format 514. For waveform (.wav) signals, the data is processed using a frequency bands decomposition process 516 to perform more common signal analysis methods for some embodiments.

For some embodiments, an .ohm file is received and processed by a metadata extraction process 508 to extract metadata from the file. An .ohm file is a format specific to the MPEG Haptics standard. An .ohm file provides metadata information to a synthesizer for rendering haptic data. The metadata may be sent to a formatting process 514 for further processing.

Given an input PCM signal, the encoding process 502 starts by performing a frequency band decomposition 516. Using a Low Pass Filter and a High pass filter, the decomposition splits the signal into a low frequency band and a high frequency band. The two bands are then processed differently. Various methods may be used for the encoding of the high frequency. For some embodiments, a keyframe extraction process 518 may be performed to extract keyframes from a signal. Such keyframes may be passed to a formatting process 514 for further processing.

For some embodiments, the high frequency signal may be split into smaller fixed length windows, and a Short-Time Fourier Transform (STFT) may be used to decompose the signal into the frequency spectrum. For some embodiments (as shown in the MPEG reference encoder 502), wavelet processing 520 may use wavelet transforms to encode the high frequencies.

For some embodiments, interchange format data may be inputted into a binary compression process 522 for compression of the formatted signal into a binary signal. The binary may be passed to a packetization process 524 to output an MIHS stream. In the decoder 504, a depacketization process 526 may be used to generate a binary signal. The binary signal may be passed to a binary decompression process 528 to generate an interchange format signal (.hjif) 530. The binary decompression process 528 may pass the decompressed signal to the synthesizer 532, which generates the output wave (.wav) signal. The synthesizer 532 may reside within a renderer 506 for some embodiments.

As detailed in the previous section and illustrated in FIG. 4, the data structure allows definition of multiple bands with different frequency ranges. These bands are used to store the coefficients of the Fourier or wavelet transforms.

## MPEG Format

As of the time of filing this application, the MPEG haptic standard defines two file formats to encode this data structure: (1) an interchange file format (.hjif) 530 encoded in JSON, and (2) a binary encoded streaming format (MIHS) that may be stored as a binary file (.hmpg). The two formats have complementary purposes, and a lossy one-to-one conversion may be operated between them. In this application, implementation details are provided for the MPEG HJIF format, but some embodiments may use the MPEG MIHS binary format or any other existing haptic format.

## Problem Statement

The current format allows haptic data to be stored as a fixed signal with a deterministic output, which means that the synthesizer outputs the same haptic signal every time. While this behavior may be suited for some use cases, like a movie enhanced with haptic data, this behavior may not be the most appropriate for other types of use cases, such as interactive experiences.

One example may be found in the videogame industry. Given a repetitive interaction that uses the same haptic effect each time may lead to weariness, even taking the user out of the experience. Indeed, this constant behavior is a reminder that the experience is faked and predetermined. The same issue exists for audio and sound effects.

To avoid this effect, game developers use tricks, such as adding randomness on the intensity or playback speed of the haptic signal. Such a methodology means that the artist in charge of the haptic effect creation does not have complete control over the creation and rendering of the final experience. In fact, the random factor may degrade the final rendering if the random parameters are too extreme, thereby negatively impacting the final experience.

As of the writing of this application, haptic effects for non-PCM data are described in the MPEG haptic standard using keyframes. At rendering time, the signal is interpolated between the keyframes using a predetermined interpolation method. The keyframes are given a timestamp, an intensity, and a frequency.

Instead of using fixed parameters to describe the haptic data, this application, for some embodiments, uses probabilistic volumes for each parameter. The final set of parameters is fixed at rendering time within the probability volume. Hence, the final synthesized haptic is different every time but determined within the scope of the description given by the content creator.

The probabilistic space may be described for each parameter or shared across the different parameters, allowing to reduce the amount of information to store. The number of dimensions of the probabilistic space is determined by the number of parameters used to describe the keyframes of the signal.

Description of the probabilistic space may be achieved by defining the type of distribution used for a given parameter followed by different parameters characterizing the chosen distribution. In the MPEG haptic standard, this methodology may be achieved by using a new object that stores the information of the distribution.

The probabilistic space may be described using the distributions presented in Table 1.

**Table 1.**

| Distribution Name | Formula | Parameters |
|---|---|---|
| Normal | $f(x) = \dfrac{1}{\sigma\sqrt{2\pi}} e^{\frac{1}{2}\left(\frac{x-\mu}{\sigma}\right)^2}$ | μ is the mean of the distribution. σ is the standard deviation of the distribution. |
| Continuous uniform | $f(x) = \begin{cases} \frac{1}{b-a} & \text{for } a \le x \le b, \\ 0 & \text{for } x < a \text{ or } x > b. \end{cases}$ | a and b, respectively, are the lower and upper bounds of where the continuous uniform distribution is defined. |
| Cauchy | $f(x; x_0, \gamma) = \dfrac{1}{\pi}\left[\dfrac{\gamma}{(x - x_0)^2 + \gamma^2}\right]$ | $x_0$ is a location parameter specifying the location of the peak of the distribution. Y is a scale parameter specifying the half-width at half-maximum (HWHM). |
| Exponential | $f(x; \lambda) = \begin{cases} \lambda e^{-\lambda x} & x \ge 0, \\ 0 & x < 0. \end{cases}$ | λ is a rate parameter. |

The application is not restricted to the use of the above distributions. The probability may be described using other probability distributions.

For some embodiments, the probability distribution may be represented using artificial neural networks (ANN). Indeed, ANN may be viewed as a function taking an input X and producing an output f: X - > Y, where f is the ANN function. The function f is learnt during the training phase of the neural network. The resulting function f is a statistical estimation of the training set. When applied herein, such a function may be used to represent a density function. The neural network may be stored as a file referenced using a Uniform Resource Identifier (URI). The input X of the ANN may be of different form, including a vector of float containing the information relatives to haptic keyframes. The output Y may be a vector or value, one for each parameter representing the haptic keyframe.

The object may be attached at different levels of the data structure shown in FIG. 2. The following subsection describes different solutions to store the haptic data probability space. This application is not restricted to the MPEG Haptic standard. The details of this application may be used in other formats and, more generally, for a time series described using parametric data.

**First Method**

For some embodiments, the probabilistic space may be described once for the whole MPEG haptic data structure. All the haptic keyframes across all the perceptions are then described using the same space. For some embodiments, this method allows a reduction in the number of bits required for describing the probabilistic space. While this method may be sufficient in some use cases, this method limits the experience design range by using only one probabilistic space.

**Second Method**

For some embodiments, the probabilistic space may be described at the perception level of the MPEG haptic data structure. All the haptic keyframes of that perception would then be described using the same space. For some embodiments, this method has the advantage of still preserving the overhead of the description of the distribution while providing more flexibility. This method may provide the capability to describe a probabilistic space for different haptic modalities.

**Third Method**

For some embodiments, the probabilistic space may be described at the channel level of the MPEG haptic data structure. All haptic keyframes of that haptic channel may be described using the same space.

## Fourth Method

For some embodiments, the probabilistic space may be described at the band level of the MPEG haptic data structure. All haptic keyframes of that haptic band may be described using the same space.

## Fifth Method

For some embodiments, the probabilistic space may be described at the effect level of the MPEG haptic data structure. All haptic keyframes of that haptic effect may be described using the same space.

## Sixth Method

For some embodiments, the probabilistic space may be described at the keyframe level of the MPEG haptic data structure. While this method may use more data, this method provides the most freedom by defining a probabilistic space for each keyframe.

## Seventh Method

For some embodiments, the probabilistic space may be described at different levels of the MPEG haptic data structure. Following the logic behind the current specification, the parameters of the probabilistic space corresponding to the metadata may be included in a higher level of the data structure than the data itself. Table 2 shows some of parameters that may be used to describe the probabilistic space. The PDF parameter may be seen as a metadata parameter, while the Data parameter contains the parameters corresponding to the probability density function selected.

A list of combinations for some embodiments is listed below:

- Metadata at experience level

    ◦ Data at perception level
    ◦ Data at channel level
    ◦ Data at the band level
    ◦ Data at the effect level
    ◦ Data at the keyframe level

- Metadata at perception level

    ◦ Data at channel level
    ◦ Data at the band level
    ◦ Data at the effect level
    ◦ Data at the keyframe level

- Metadata at channel level

    ◦ Data at the band level
    ◦ Data at the effect level
    ◦ Data at the keyframe level

- Metadata at band level

    ◦ Data at the effect level
    ◦ Data at the keyframe level

- Metadata at effect level

    ◦ Data at keyframe level

The probabilistic space may be represented as shown in Table 2. Table 2 lists a possible probability density function used to represent the probabilistic haptic data. The application is not restricted to the use of those functions, and other functions may be provided given that the function may be described as a probability distribution.

**Table 2.**

| Parameters | Type | Description |
|---|---|---|
| PDF | enum | This parameter is the Probability Density Function, which describes the probabilistic space of the haptic data. Possible values are shown in Table 3. |
| Data | | The Data parameter holds the parameters used to define the probability density function. These parameters depend on the type of probability density function used to represent the haptic data. The different values are shown in Table 4. |

Table 3 shows a list of possible identifier values and the associated probability density function name.

**Table 3.**

| ID | Probability Density Function |
|---|---|
| 0 | Continuous Uniform |
| 1 | Normal |
| 2 | Cauchy |
| 3 | Exponential |
| 4 | Other |

Table 4 lists parameters associated with the probability density function (PDF) for some embodiments. For some embodiments, other probability density functions may be used.

**Table 4.**

| Probability Density Function | Number of Parameters | Parameter 1 | Parameter 2 | ... | Parameter N |
|---|---|---|---|---|---|
| Continuous Uniform | 2 | Interval Infimum of the probability density function | Interval Supremum of the probability density function | - | - |
| Normal | 2 | $\mu$ mean of the distribution, a k-dimension vector, where k is the number of parameters used to represent the haptic data. | $\Sigma$ covariance matrix. Squared matrix of dimension kxk. | - | - |
| Cauchy | 2 | $\chi 0$ distribution location | $Y > 0$, scale | - | - |
| Exponential | 1 | $\lambda > 0$, rate or inverse scale | - | - | - |
| Other | N | URI to an external process | First parameter of the probability density function | ... | Last ((N-1)-th) parameter of the probability density function |

## MPEG Implementation

As of the writing of this application, the current version of the MPEG haptic standard defines a data structure used to store haptic data. Two file formats are described: (1) a human-readable format based on a JSON using the hjif extension; and (2) a compressed binary format using the hmpg extension. For clarity reasons, this application describes the hjif format. The ideas contained herein may also be implemented in a binary format. The MPEG haptic standard is given as an example of implementation, but this application is not constrained to the MPEG haptic standard.

**First Method**

For some embodiments, the probability space may be described at the haptic experience level. In that case, the data-structure shown in FIG. 2 may be modified by adding the following parameters to the metadata of the haptic experience object. A "pdf flag" parameter may be added to the object to signal if the haptic experience is using a probabilistic representation. If the "pdf flag" is set to true, the properties "pdf" and "pdf data" are stored. Otherwise, these two properties are not present.

Table 5 includes modifications to the haptic experience object of the MPEG data-structure and probabilistic space description additions.

**Table 5.**

| Property | Description |
|---|---|
| version | Year of the edition and amendment of ISO/IEC 23090-31 that this file conforms to, in the following format: XXXX or XXXX-Y, where XXXX is the year of publication and Y is the amendment number, if any. |
| profile | Name of the profile used to generate the encoded stream as defined in the normative **Error! Reference source not found..** |
| level | Number of the level used to generate the encoded stream as defined in the normative **Error! Reference source not found..** |
| date | Creation date of this haptic experience. |
| description | A user description of this haptic experience. |
| timescale | Number of ticks per second. |
| pdf flag | Boolean signalling if this haptic experience is using a probabilistic space to define the haptic data. |
| pdf | Probability Density Function that describes the probabilistic space of the haptic data. |
| pdf data | The different parameters used to define the probability density function. The parameters depend on the type of the probability density function used to represent the haptic data. The detail of this property is described in Table 4. |
| avatars | List of avatars defining body representations used in the haptic experience. See section 5.3 of *Text of ISO/IEC FDIS 23090-31 MPEG Haptics Coding,* ISO/IEC JTC 1/SC 29/WG 7, N00832, 23090-31, (Jan. 2024) ("*ISO/IEC 23090-31*"). |
| perceptions | List of perceptions describing a haptic signal. See *ISO/IEC 23090-31,* sec. 5.4. |

Table 6 includes modifications to the MPEG_haptics object.

**Table 6.**

| Property | Type | Default | Description | Required |
|---|---|---|---|---|
| version | string | N/A | Year of the edition and amendment of ISO/IEC 23090-31 that this file conforms to, in the following format: XXXX or XXXX-Y, where XXXX is the year of publication and Y is the amendment number, if any. For this document, the value shall be "2023". | Yes |
| profile | string | N/A | Name of the profile used to generate the encoded stream according to the profile@level definition in the normative Annex D. | Yes |
| level | integer | N/A | Number of the level used to generate the encoded stream according to the profile@level definition in the normative Annex D. The value shall be equal to or greater than zero. | Yes |

(continued)

| Property | Type | Default | Description | Required |
|---|---|---|---|---|
| date | string | N/A | Indicates the creation date of this haptic experience. The date format shall conform to ISO 8601 series. | Yes |
| description | string | N/A | The user-defined description of this haptic experience. | Yes |
| timescale | integer | 1000 | Number of ticks per second. The value shall be greater than zero. | No |
| pdf flag | boolean | False | Boolean signalling if this haptic experience is using a probabilistic space to define the haptic data. | Yes |
| pdf | enum<string> | N/A | Probability Density Function that describes the probabilistic space of the haptic data. Possible values are described in Table 3. | No |
| pdf_data | array<number> | N/A | The different parameters used to define the probability density function. The parameters depend on the type of the probability density function used to represent the haptic data. The detail of this property is described in Table 4. | No |
| avatars | array<MPEG_haptics. avatar> | N/A | Provides the List of MPEG_haptics.avatar values as described in *ISO/IEC 23090-31*, sec. 6.2.2. | Yes |
| perceptions | array<MPEG_haptics. perception> | N/A | Provides the List of MPEG_haptics.perception values as described in *ISO/IEC 23090-31,* sec. 6.2.3. The array shall contain at least one element. | Yes |
| syncs | array <M PEG_haptics.sync> | N/A | Provides the List of MPEG_haptics.sync values as described in *ISO/IEC 23090*-31, sec. 6.2.4. | No |

## Second Method

For some embodiments, the probability space may be described at the Haptic perception level. In that case, the data-structure shown in FIG. 2 may be modified by adding the following parameters to the metadata of the haptic perception object. A "pdf flag" parameter may be added to the object to signal if the haptic perception is using a probabilistic representation. If the "pdf flag" is set to true, the properties "pdf" and "pdf data" are stored. Otherwise, these two properties are not present.

Table 7 includes modifications to the haptic perception object of the MPEG data-structure and probabilistic space description additions.

**Table 7.**

| Property | Description |
|---|---|
| id | Unique ID of the perception in this experience. |
| perception modality | Type of perception modality of the haptic signal. The detailed list of perception modalities and the associated units is given in *ISO/IEC 23090-31,* Table 4. |
| description | Description of the haptic data contained in the perception. |
| priority | Importance of the perception for scalability. A lower value indicates higher priority. Given a limited bandwidth, decoders may ignore perception with a higher priority value. |
| avatar id | Unique ID of the associated avatar. |
| effect library | List of haptic effects as described in *ISO/IEC 23090-31,* sec. 5.8. Each effect from the library has an ID and may be referenced directly in a band. See *ISO/IEC 23090-31,* sec. 5.7. |

(continued)

| Property | Description |
|---|---|
| semantic scheme | Scheme URN of the semantic description of effects. The default scheme is identified with urn:mpeg:mpegi:haptics:effectsemantic:2023. Semantic keyword is a two-layer hierarchical metadata structure as described in *ISO/IEC 23090-31,* Table 13. The scheme may be added as a supplementary information to an effect. At most one layer 1 and at most one layer 2 semantic keyword shall be included with one effect. These keywords indicate the desired designer intention. When a presentation engine is incapable of rendering the exact specified effect, the engine may decide to render a similar effect or not render at all. One example is a gunshot designed for a VR controller with a specific frequency range. A VR gun prop may be developed with its own haptics library. |
| reference devices | List of targeted haptic reference devices or actuators used for this haptic perception. See *ISO/IEC 23090-31,* sec. 5.5. |
| pdf flag | Boolean signalling if this haptic experience is using a probabilistic space to define the haptic data. |
| pdf | Probability Density Function that describes the probabilistic space of the haptic data. Possible values are described in Table 3. |
| pdf data | The different parameters used to define the probability density function. The parameters depend on the type of the probability density function used to represent the haptic data. The detail of this property is described in Table 4. |
| channels | List of haptic channels comprising this perception. |
| unit exponent | Exponent of the powers of 10 for the SI unit of effect positions and keyframe positions of spatial modalities. This property specifies which measurement unit is used to encode the given perception. By default, the considered value is -3 (millimeters). |
| perception unit exponent | Exponent of the powers of 10 for the SI unit measure of the dependent variable. This property specifies which measurement unit is used to output the given perception. By default, the considered value is 0. For example, if the perception modality is set to stiffness and this exponent is set to 0, the perception experience is encoded in Newton. |

Table 8 includes modifications to the MPEG_haptics.perception object.

**Table 8.**

| Property | Type | Default | Description | Required |
|---|---|---|---|---|
| id | integer | N/A | Unique ID of the perception in the haptic experience. The value shall be equal to or greater than zero. | Yes |
| perception_modality | enum<string> | N/A | Indicates the type of perception as described in *ISO/IEC 23090-31,* sec. 5.4. Possible values are: "Pressure" "Acceleration" "Velocity" "Position" "Temperature" "Vibrotactile" "Water" "Wind" "Force" "Electrotactile" "Vibrotactile Texture" "Stiffness" "Friction" "Humidity" | Yes |

(continued)

| Property | Type | Default | Description | Required |
|---|---|---|---|---|
| | | | "User-defined Temporal" "User-defined Spatial" "Other" | |
| description | string | N/A | The user-defined description of the haptic perception. | Yes |
| priority | integer | 255 | Importance of the perception for scalability. A lower value indicates higher priority. The value shall be equal to or greater than zero. Given a limited bandwidth, decoders may ignore perception with a higher priority value. | No |
| avatar_id | integer | N/A | Unique ID of the associated avatar body model from *ISO/IEC 23090-31,* sec. 6.2.2. The value shall reference the id of an existing avatar from the avatars array as described in *ISO/IEC 23090-31,* Table 18 or be equal to 0. The 0 value means that no avatar is not specified. | Yes |
| effect_library | array<MPEG_ haptics.effect> | N/A | List of predefined MPEG_haptics.effect values as described in *ISO/IEC 23090-31,* sec. 6.2.8.. The list may be empty. Library effects are referenced directly in the channels. | Yes |
| semantic_sc heme | string | urn:mpeg :mpegi:h aptics:eff ectsema ntic:2023 | Scheme URN of the the semantic description of effects. | No |
| reference_ devices | array<MPEG_ haptics.reference_ devices> | N/A | List of targeted M PEG_haptics_reference.device devices or actuators as described in *ISO/IEC 23090*-31, sec. 6.2.4 for this haptic perception. | No |
| pdf flag | boolean | False | Boolean signalling if this haptic experience is using a probabilistic space to define the haptic data. | Yes |
| pdf | enum<string> | N/A | Probability Density Function that describes the probabilistic space of the haptic data. Possible values are described in Table 3. | No |
| pdf_data | array<number> | N/A | The different parameters used to define the probability density function. The parameters depend on the type of the probability density function used to represent the haptic data. The detail of this property is described in Table 4. | No |
| channels | array<MPEG_ haptics.channel> | N/A | List of MPEG_haptics.channel values as described in *ISO/IEC 23090-31,* sec. 6.2.6 composing this perception. The array shall contain at least one element. | Yes |

(continued)

| Property | Type | Default | Description | Required |
|---|---|---|---|---|
| unit_ exponent | integer | -3 | Refers to the exponent of the powers of 10 for the SI unit of effect positions and keyframe positions of spatial modalities. See *ISO/IEC 23090-31,* sec. 5.4. | No |
| perception_unit_exponent | integer | 0 | Refers to the exponent of the powers of 10 for the SI unit measure of the dependent variable. See *ISO/IEC* 23090-31, sec. 5.4. | No |

**Third Method**

For some embodiments, the probability space may be described at the haptic channel level. In that case, the data-structure shown in FIG. 2 may be modified by adding the following parameters to the metadata of the haptic channel object. A "pdf flag" parameter may be added to the object to signal if the haptic perception is using a probabilistic representation. If the "pdf flag" is set to true, the properties "pdf' and "pdf data" are stored. Otherwise these two properties are not present.

Table 9 includes modifications to the haptic channel object of the MPEG data-structure and probabilistic space description additions.

**Table 9.**

| Property | Description |
|---|---|
| id | Unique ID of the channel. The identifier is unique among all channels in the perception containing this channel. |
| description | Description of the channel. |
| priority | Importance of the channel for scalability. A lower value indicates higher priority. Given a limited bandwidth, decoders may ignore perception with a higher priority value. |
| reference device id | Targeted reference device from the list defined in the perception. |
| gain | Gain associated with the channel to adapt the normalized encoded data values to a typical device, according to: $$V = gain * x,$$ where *x* corresponds to the normalized encoded data. |
| mixing coefficient | Weight of the channel when mixing different channels together to produce a mixed signal. The resulting signal is given by: $$V = \frac{\sum V_i * coefficient_i}{\sum coefficient_i},$$ where $V_i$ corresponds to the signal of channel *i*. A mixing coefficient of 0 indicates that the channel is not mixed. |
| body part mask | Binary mask specifying the location of the effect on the body as described in *ISO/IEC 23090-31*, Table 7. The binary mask 0x0 indicates that the body part is not specified. The application may render the effect anywhere. The mask 0xFFFFFFFF corresponds to the full body. It means that the effect is applied on the whole body; for instance, a background effect. |
| actuator resolution | Reference actuator resolution used to design the haptic experience. This value linked to body part target and actuator target may be used together as an experience spatialization model on the human body. |
| body part target | Identification of a unique body part or group of body parts on the human body. *ISO/IEC 23090-31*, Table 9 describes values that may be stored here to construct the targeting command. |
| actuator target | List of different coordinates to target actuators on the previously identified human body parts. |

(continued)

| Property | Description |
|---|---|
| frequency sampling | Sampling frequency of the original encoded signal (Hz). This may be used by the synthesizer to reconstruct the original signal. However, the synthesizer may sample the output signal at another sampling frequency. |
| sample count | Present if the frequency sampling value is greater than zero. It is the number of samples of the original encoded signal. This may be used along with the frequency sampling by the synthesizer to ensure that the output signal has the same size and duration as the original file. |
| vertices | List of the vertices from the avatar impacted by the effect. More precisely, it is the list of indices of the vertices from the mesh associated with the avatar of the perception. If the avatar does not specify a mesh, this field should be ignored. The vertices impacted by the effects of this channel are the body locations where the effects should be applied. The appropriate avatar representation is referenced by the avatar ID indicated at the perception level. See *ISO/IEC 23090-31,* sec. 5.4 |
| pdf flag | Boolean signalling if this haptic experience is using a probabilistic space to define the haptic data. |
| pdf | Probability Density Function that describes the probabilistic space of the haptic data. Possible values are described in Table |
| pdf data | The different parameters used to define the probability density function. The parameters depend on the type of the probability density function used to represent the haptic data. The detail of this property is described in Table 4. |
| bands | List of haptic bands comprising the channel. A channel may include one or several bands. A band corresponds to a frequency bandwidth. If the bands array is empty, it corresponds to a channel without any haptic effect. As illustrated in FIG. 3, the haptic signal of a channel is the sum of the signals in each band. |
| direction | Specifies a spatial direction for the channel as described in *ISO/IEC 23090-31,* sec. 5.6.4. This direction metadata should only be used with haptic modalities dependent on space (i.e. Vibrotactile Texture, Stiffness and Friction). It indicates a preferred rendering direction of the haptic perception of the targeted body part. It may be composed with X, Y and Z following the formalism for unit vectors to indicate any direction in the 3D space. Each integer value stored in this vector will be transformed from its initial range [-127,127] to the [-1,1] range to interpret this vector as unitary. |

Table 10 includes modifications to the MPEG_haptics.channel object.

**Table 10.**

| Property | Type | Default | Description | Required |
|---|---|---|---|---|
| id | integer | N/A | Unique ID of the channel in the perception containing the channel. The value shall be equal to or greater than zero. | Yes |
| description | string | N/A | The user-defined description of the channel. | Yes |
| priority | integer | 255 | Importance of the channel for scalability. A lower value indicates higher priority. The value shall be equal to or greater than zero. Given a limited bandwidth, decoders may ignore perception with a higher priority value. | No |
| reference_ device id | integer | N/A | ID of the targeted reference device or actuator from the list defined in the MPEG_haptics.perception element. The value shall reference the id of an existing reference device from the reference_devices array as described in *ISO/IEC 23090-31,* Table 20 or may be equal to 0. A "0" value means that no reference device is specified. | No |

(continued)

| Property | Type | Default | Description | Required |
|---|---|---|---|---|
| gain | number | N/A | Gain associated with the channel. The value shall be equal to or greater than zero. | Yes |
| mixing_coefficient | number | N/A | Weight of the channel used when mixing different channels together. Value 0 indicates that the channel will not be mixed. The value shall be equal to or greater than zero. | Yes |
| body_part_mask | integer | 0 | Binary mask specifying the location of the effect on the body as defined in Table 7 of *ISO/IEC 23090-31*, sec. 5.6. The value shall be greater than or equal to zero. | No |
| actuator_ resolution | MPEG_haptic_ vector | N/A | Reference actuator resolution used to design the haptic experience. The values in the vector shall be equal to or greater than zero. | No |
| body_part_target | array<string> | N/A | Semantic identification of a unique body part or group of body parts on the human body as described in *ISO/IEC 23090-31,* Table 9. | No |
| actuator_target | array<MPEG_ haptics.vector> | N/A | List of different actuators targeted by the channel and identified by its coordinates. | No |
| frequency_ sampling | integer | N/A | Sampling frequency of the original encoded signal (Hz). If present, the value shall be equal to or greater than zero.. | No |
| sample_count | integer | N/A | Number of samples of the original encoded signal. If present, the value shall be equal to or greater than zero.. | No |
| vertices | array<integer> | N/A | List of indices of the vertices from the avatar impacted by the effect. The associated avatar representation is given by the avatar_id indicated in the MPEG_haptics.perception. See *ISO/IEC* 23090-31, sec. 6.2.3. | No |
| pdf flag | boolean | False | Boolean signalling if this haptic experience is using a probabilistic space to define the haptic data. | Yes |
| pdf | enum<string> | N/A | Probability Density Function that describes the probabilistic space of the haptic data. Possible values are described in Table 3. | No |
| pdf_data | array<number> | N/A | The different parameters used to define the probability density function. The parameters depend on the type of the probability density function used to represent the haptic data. The detail of this property is described in Table 4. | No |
| bands | array<MPEG_ haptics.band> | N/A | List of haptic bands comprising the channel. A channel may include one or several bands. A band corresponds to a frequency bandwidth as described in *ISO/IEC 23090-31,* sec. 6.2.8. If the bands array is empty, the channel does not contain haptic data. | Yes |

(continued)

| Property | Type | Default | Description | Required |
|---|---|---|---|---|
| direction | MPEG_haptic. vector | N/A | Spatial direction for the channel, defined with an MPEG_haptics.vector as described in *ISO/IEC 23090-31,* sec. 6.2.7. This property is only used with haptic modalities dependent on the space dimension (i.e. vibrotactile texture, stiffness and friction). Each integer value stored in this vector will be transformed from its initial range [-127,127] to the [-1,1] range to interpret this vector as unitary. | No |

**Fourth Method**

For some embodiments, the probability space may be described at the haptic band level. This method may be achieved using two ways. A first method is described below with regard to Tables 11 and 12. A second method is described below with regard to Tables 13 and 14.

For some embodiments, the metadata of the haptic channel object may be modified by adding the following parameters. A "pdf flag" parameter may be added to the object to signal if the haptic perception is using a probabilistic representation. If the "pdf flag" is set to true, the properties "pdf' and "pdf data" are stored. Otherwise, these two properties are not present. This implementation is shown below in Table 11.

Table 11 includes modifications to the haptic band object of the MPEG data-structure for the first approach and probabilistic space description additions.

**Table 11.**

| Property | Description |
|---|---|
| band type | Type of data contained in the band. There are four types of haptic bands: curve bands, transient bands, vectorial wave bands and wavelet wave bands. For each type of band, the information it contains has a different meaning: <br><br> Curve bands represent haptic signals with curves, described by a set of control points and a type of interpolation in-between. <br><br> Transient bands represent short momentary haptic effects, described with amplitude and frequency parameters. <br><br> Vectorial wave bands represent parametric haptic effects; described by a vector of parameters including temporal or spatial position, amplitude and frequency. The model allows both amplitude and frequency modulation of the signal. <br><br> Wavelet wave bands represent haptic effects encoded with wavelet transform decomposition, quantization, binary tree structure, and entropy coding. <br><br> Details on how the data contained in keyframes is interpreted depending on the type of bands are described in *ISO/IEC 23090-31,* sec. 5.9. |
| priority | Importance of the band for scalability. A lower value indicates higher priority. Given a limited bandwidth, decoders may ignore perception with a higher priority value. |
| Curve type | Present only for curve bands. This specifies the interpolation method boolean be used to synthetize the haptic signal of the band. Possible values are: <br><br> Linear <br><br> Cubic <br><br> Akima <br><br> Bézier <br><br> B-spline <br><br> Unknown (for application specific functions) |
| block length | This property is only present for wavelet wave bands. It is the duration of a wavelet block. |
| Lower frequency limit | Lower frequency limit of the band (Hz). |

(continued)

| Property | Description |
|---|---|
| Upper frequency limit | Upper frequency limit of the band (Hz). |
| pdf flag | Boolean signalling if this haptic experience is using a probabilistic space to define the haptic data. |
| pdf | Probability Density Function that describes the probabilistic space of the haptic data. Possible values are described in Table 3. |
| pdf data | The different parameters used to define the probability density function. The parameters depend on the type of the probability density function used to represent the haptic data. The detail of this property is described in Table 4. |
| Effects | List of haptic effects as described in *ISO/IEC 23090-31,* sec. 5.8. If the effect list is empty, the band does not contain haptic data. |

Table 12 includes modifications to the MPEG_haptics.band object for some embodiments.

**Table 12.**

| Property | Type | Default | Description | Required |
|---|---|---|---|---|
| band_type | enum<string> | N/A | Indicates the type of data contained in the band as described in *ISO/IEC 23090-31,* sec. 5.7. Possible values are:<br>"WaveletWave"<br>"VectorialWave"<br>"Curve"<br>"Transient" | Yes |
| priority | integer | 255 | Importance of the band for scalability. A lower value indicates higher priority. The value shall be equal to or greater than zero. Given a limited bandwidth, decoders may ignore perception with a higher priority value. | No |
| curve_type | enum<string> | Linear | Indicates the type of interpolation function that should be used by the synthesizer as described in *ISO/IEC 23090-31*, sec. 5.7. Possible values are:<br>"Linear"<br>"Cubic"<br>"Akima"<br>"Bezier"<br>"BSpline"<br>"Unknown" | No |
| block_length | integer | N/A | Number of samples of a wavelet effect block. The duration of this block is derived from the sampling frequency of the channel. This property is required when band_type is equal to "WaveletWave". The value shall be greater than 16 and be a power of 2. | Conditional |
| lower_ frequency_ limit | number | N/A | Lower frequency limit of the band (Hz). The value should be in the range [0,10000]. | Yes |
| upper_ frequency_ limit | number | N/A | Indicates the upper frequency limit of the band (Hz). The value should be in the range [0,10000]. | Yes |
| pdf flag | boolean | False | Boolean signalling if this haptic experience is using a probabilistic space to define the haptic data. | Yes |

(continued)

| Property | Type | Default | Description | Required |
|---|---|---|---|---|
| pdf | enum<string> | N/A | Probability Density Function that describes the probabilistic space of the haptic data. Possible values are described in Table 3. | No |
| pdf_data | array<number> | N/A | The different parameters used to define the probability density function. The parameters depend on the type of the probability density function used to represent the haptic data. The detail of this property is described in Table 4. | No |
| effects | array<MPEG_haptics_effect> | N/A | List of MPEG_haptics.effect values as described in *ISO/IEC 23090-31*, sec. 6.2.9. If the effects array is empty, the band does not contain haptic data. | Yes |

For some embodiments, new band types may be added to store the probabilistic haptic data. This second method has the advantage of preserving the current format with backward compatibility, while adding new features to the codec. This implementation is denoted in Table 13.

Table 13 includes modifications to the haptic band object of the MPEG data-structure for the second approach and probabilistic space description additions.

**Table 13.**

| Property | Description |
|---|---|
| band type | Type of data contained in the band. There are four types of haptic bands: curve bands, transient bands, vectorial wave bands and wavelet wave bands. For each type of band, the information it contains has a different meaning: Curve bands represent haptic signals with curves, described by a set of control points and a type of interpolation in-between. Transient bands represent short momentary haptic effects, described with amplitude and frequency parameters. Vectorial wave bands represent parametric haptic effects; described by a vector of parameters including temporal or spatial position, amplitude and frequency. The model allows both amplitude and frequency modulation of the signal. Wavelet wave bands represent haptic effects encoded with wavelet transform decomposition, quantization, binary tree structure, and entropy coding. Probabilistic curve bands represent haptic signals with curves, described by a set of control points defined within a probabilistic space and a type of interpolation in-between. Probabilistic transient represent short momentary haptic effects, described with amplitude and frequency parameters described using a probabilistic space. Probabilistic vectorial wave represent parametric haptic effects described in using a probabilistic space; described by a vector of parameters including temporal or spatial position, amplitude and frequency. The model allows both amplitude and frequency modulation of the signal. Details on how the data contained in keyframes is interpreted depending on the type of bands are described in *ISO/IEC 23090-31,* sec. 5.9. |
| priority | Importance of the band for scalability. A lower value indicates higher priority. Given a limited bandwidth, decoders may ignore perception with a higher priority value. |
| Curve type | Present only for curve bands. This specifies the interpolation method boolean to be used to synthetize the haptic signal of the band. Possible values are: Linear Cubic Akima Bézier B-spline |

(continued)

| Property | Description |
|---|---|
| | Unknown (for application specific functions) |
| block length | This property is only present for wavelet wave bands. This property is the duration of a wavelet block. |
| Lower frequency limit | Lower frequency limit of the band (Hz). |
| Upper frequency limit | Upper frequency limit of the band (Hz). |
| pdf | Probability Density Function that describes the probabilistic space of the haptic data. Possible values are described in Table 3. This parameter is present only if band type is Curve probabilistic, or transient probabilistic, or vectorial wave probabilistic. |
| pdf data | The different parameters used to define the probability density function. The parameters depend on the type of the probability density function used to represent the haptic data. The detail of this property is described in Table 4. This parameter is present only if band type is Curve probabilistic, or transient probabilistic, or vectorial wave probabilistic. |
| Effects | List of haptic effects as described in *ISO/IEC 23090-31,* sec. 5.8. If the effect list is empty, the band does not contain haptic data. |

Table 14 includes modifications to the MPEG_haptics.band object for some embodiments.

**Table 14.**

| Property | Type | Default | Description | Required |
|---|---|---|---|---|
| band_type | enum<string> | N/A | Indicates the type of data contained in the band as described in *ISO/IEC 23090-31*, sec. 5.7.<br>Possible values are:<br>"WaveletWave"<br>"VectorialWave"<br>"Curve"<br>"Transient"<br>"ProbabilisticCurve"<br>"ProbabilisticTransient"<br>"ProbabilisticVectorialWave" | Yes |
| priority | integer | 255 | Importance of the band for scalability. A lower value indicates higher priority. The value shall be equal to or greater than zero. Given a limited bandwidth, decoders may ignore perception with a higher priority value. | No |
| curve_type | enum<string> | Linear | Indicates the type of interpolation function that should be used by the synthesizer as described in *ISO/IEC 23090-31*, sec. 5.7. Possible values are:<br>"Linear"<br>"Cubic"<br>"Akima"<br>"Bezier"<br>"BSpline"<br>"Unknown" | No |
| block_ length | integer | N/A | Number of samples of a wavelet effect block. The duration of this block is derived from the 35sampling frequency of the channel. This property is required when band_type is equal to "WaveletWave". The value shall be greater than 16 and be a power of 2. | Conditional |

(continued)

| Property | Type | Default | Description | Required |
|---|---|---|---|---|
| lower_ frequency_ limit | number | N/A | Lower frequency limit of the band (Hz). The value should be in the range [0,10000]. | Yes |
| upper_ frequency_ limit | number | N/A | Indicates the upper frequency limit of the band (Hz). The value should be in the range [0,10000]. | Yes |
| pdf | enum<string> | N/A | Probability Density Function that describes the probabilistic space of the haptic data. Possible values are described in Table 3. | No |
| pdf_data | array<number> | N/A | The different parameters used to define the probability density function. The parameters depend on the type of the probability density function used to represent the haptic data. The detail of this property is described in Table 4. | No |
| effects | array<MPEG_ haptics_effect> | N/A | List of MPEG_haptics.effect values as described in *ISO/IEC 23090-31,* sec. 6.2.9. If the effects array is empty, the band does not contain haptic data. | Yes |

**Fifth Method**

For some embodiments, the probability space may be described at the Haptic effect level. In that case, the data-structure shown in FIG. 2 may be modified by adding the following parameters to the metadata of the haptic effect object. A "pdf flag" parameter may be added to the object to signal if the haptic perception is using a probabilistic representation. If the "pdf flag" is set to true, the properties "pdf" and "pdf data" are stored. Otherwise, these two properties are not present.

Table 15 includes modifications to the haptic effect object of the MPEG data-structure for the second approach and probabilistic space description additions.

**Table 15.**

| Property | Description |
|---|---|
| Id | Unique ID of the effect. This property is required for effects defined at the perception level in the library and for reference effects. For reference effects, this property corresponds to the ID of the library effect being referenced. The ID is unique among all effect IDs in this haptic experience. |
| Effect type | Type of haptic effect. Possible values are:<br>Basis: Effect containing signal data defined through a set of keyframes.<br>Composite: Effect composed of a set of other effects defined in the composition property. This type of effect does not directly contain keyframes.<br>Reference: Effect referencing an effect in the library. This type of effect is used at the band level to reference effects defined at the perception level in the effect library using a unique ID. |
| Semantic keywords | Semantic keywords of the haptic effect. It is an optional field that may be added to an effect. |
| Position | Indicates the temporal or spatial position of the effect. The value 0 corresponds to the starting position of the experience. The default unit for temporal haptic feedback will be milliseconds while it will be millimetres for spatial haptic feedback. Temporal or spatial is defined by the perception Modality. |
| Phase | Indicates the phase of the effect in radian in the range $[0,2\pi]$. This value is used only for vectorial wave bands and is ignored in effects stored inside a band of a different type. |
| Base signal | This property is only used for vectorial wave bands. It defines the type of waveform signal to be used by the synthesizer. Possible values are:<br>Sine<br>Square |

(continued)

| Property | Description |
|---|---|
|  | Triangle<br>Sawtooth up<br>Sawtooth down |
| composition | This property may only be used with composite effects. It contains a sub-list of effects. |
| pdf flag | Boolean signalling if this haptic experience is using a probabilistic space to define the haptic data. |
| pdf | Probability Density Function that describes the probabilistic space of the haptic data. Possible values are described in Table 3 |
| pdf data | The different parameters used to define the probability density function. The parameters depend on the type of the probability density function used to represent the haptic data. The detail of this property is described in Table 4. |
| keyframes | List of keyframes as described in *ISO/IEC 23090-31*, sec. 5.9. The keyframes list is only used for basis effects. |
| Wavelet stream | Encoded wavelet stream. |

Table 16 includes modifications to the MPEG_haptics.effect object.

**Table 16.**

| Property | Type | Default | Description | Required |
|---|---|---|---|---|
| id | integer | N/A | ID of an effect. For any effect from the effect library and any "Reference" effect, the value shall be defined and be equal to or greater than zero. For all other effects the property shall not be defined. For any non-"Reference" effect from the effect library , the value shall be unique in the perception. | Conditional |
| effect_type | enum<string> | N/A | Indicates the type of haptic effect. Effect-type value equals one of: "Basis", "Composite" and "Reference". | Yes |
| semantic_keywords | string | N/A | Semantic keywords included with the effect. | No |
| position | integer | N/A | Indicates the temporal or spatial position of the effect according to the perception modalities as described in *ISO/IEC* 23090-31, Table 4. In the case of temporal, position/timescale is the temporal position in seconds. The value shall be equal to or greater than zero. In a band where band_type = "WaveletWave", this property shall only exist for the first effect (and no other). For any other band type, the property is required. | Conditional |
| phase | number | 0 | Phase of the effect for Transient and Vectorial bands. The value should be in the range [0,2$\pi$]. | No |
| base_signal | enum<string> | Sine | Indicates the type of the waveform signal for transient and vectorial wave bands. Possible values are:<br>"Sine"<br>"Square"<br>"Triangle"<br>"SawToothUp" | No |

(continued)

| Property | Type | Default | Description | Required |
|---|---|---|---|---|
| | | | "SawToothDown" | |
| composition | array<MPEG_haptics.effect> | N/A | This attribute may only be used with composite effects. It contains a list of effects. This type of effect does not directly contain keyframes. | No |
| pdf flag | boolean | False | Boolean signalling if this haptic experience is using a probabilistic space to define the haptic data. | Yes |
| pdf | enum<string> | N/A | Probability Density Function that describes the probabilistic space of the haptic data. Possible values are described in Table 3. | No |
| pdf_data | array< number > | N/A | The different parameters used to define the probability density function. The parameters depend on the type of the probability density function used to represent the haptic data. The detail of this property is described in Table 4. | No |
| keyframes | array<MPEG_haptics. keyframe> | N/A | List of MPEG_haptics.keyframes values as described in *ISO/IEC 23090-31,* sec. 6.2.10. This property is required for basis effects. If the keyframes array is empty, the effect does not contain haptic data. This property shall not exist when band_type="WaveletWave". | No |
| wavelet_stream | string | N/A | Base64 encoding with most significant bit first (conformant to RFC 4648) of the encoded wavelet stream. This property shall exist only when band_type="WaveletWave". The decoding process as described in *ISO/IEC 23090-31,* sec. 8.3.3. | Conditional |

## Sixth Method

For some embodiments, the probability space may be described at the haptic keyframe level. In that case, the data-structure shown in FIG. 2 may be modified by adding the following parameters to the metadata of the haptic keyframe object. A "pdf flag" parameter may be added to the object to signal if the haptic perception is using a probabilistic representation. If the "pdf flag" is set to true, the properties "pdf' and "pdf data" are stored. Otherwise, these two properties are not present.

Table 17 includes modification to the haptic keyframe object of the MPEG data-structure for the second approach and probabilistic space description additions.

**Table 17.**

| Property | Description |
|---|---|
| amplitude modulation | Amplitude of the keyframe. For vibrotactile signals, a negative vibration refers to an opposite polarity of the modulated signal. |
| Frequency modulation | Relative frequency of the keyframe. |
| Relative position | Relative position of the keyframe. |
| pdf flag | Boolean signalling if this haptic experience is using a probabilistic space to define the haptic data. |
| pdf | Probability Density Function that describes the probabilistic space of the haptic data. Possible values are described in Table 3. |

(continued)

| Property | Description |
|---|---|
| pdf data | The different parameters used to define the probability density function. The parameters depend on the type of the probability density function used to represent the haptic data. The detail of this property is described in Table 4. |

Table 18 includes modifications to the MPEG_haptics.keyframe object.

**Table 18.**

| Property | Type | Default | Description | Required |
|---|---|---|---|---|
| amplitude_ modulation | number | N/A | Amplitude of the keyframe. The value shall be in the range [-1,1]. | No |
| frequency_ modulation | number | N/A | Relative frequency of the keyframe. The value shall be in the range [0,10000] | No |
| re!ative_ position | integer | N/A | Relative position of the keyframe. In the case of temporal, relative_position/timescale is the relative position in seconds. The value shall be equal to or greater than zero. | No |
| pdf flag | boolean | False | Boolean signalling if this haptic experience is using a probabilistic space to define the haptic data. | Yes |
| pdf | enum<string> | N/A | Probability Density Function that describes the probabilistic space of the haptic data. Possible values are described in Table 3. | No |
| pdf_data | array<number> | N/A | The different parameters used to define the probability density function. The parameters depend on the type of the probability density function used to represent the haptic data. The detail of this property is described in Table 4. | No |

**Seventh Method**

For some embodiments, the probability space may be described at the different levels of the data structure shown in FIG. 2. The metadata of the probabilistic space may be composed of the pdf_flag and pdf parameters, and the data of the probabilistic space may be represented by the pdf_data parameter. The implementation of this method may be achieved by storing the metadata of the probabilistic space at a strictly higher level of the data structure than the data of the probabilistic space. The different possible combinations are listed earlier in the application.

For clarity purposes, this application describes the methodology where the probabilistic space metadata is stored at the MPEG_band level, and the probabilistic space data is stored at the effect level. As described earlier, the MPEG_haptics.band level may implemented in two ways: (1) storing the pdf information by defining new band_type, or (2) using a pdf_flag parameters. The first implementation of the MPEG_haptics.band object is shown in Table 19.

**Table 19.**

| Property | Type | Default | Description | Required |
|---|---|---|---|---|
| band_type | enum<string> | N/A | Indicates the type of data contained in the band as described in *ISO/IEC 23090-31*, sec. 5.7. Possible values are: "WaveletWave" "VectorialWave" "Curve" "Transient" "ProbabilisticCurve" | Yes |

(continued)

| Property | Type | Default | Description | Required |
|---|---|---|---|---|
| | | | "ProbabilisticTransient"<br>"ProbabilisticVectorialWave" | |
| priority | integer | 255 | Importance of the band for scalability. A lower value indicates higher priority. The value shall be equal to or greater than zero. Given a limited bandwidth, decoders may ignore perception with a higher priority value. | No |
| curve_type | enum<string> | Linear | Indicates the type of interpolation function that should be used by the synthesizer as described in *ISO/IEC 23090-31*, sec. 5.7. Possible values are:<br>"Linear"<br>"Cubic"<br>"Akima"<br>"Bezier"<br>"BSpline"<br>"Unknown" | No |
| block_length | integer | N/A | Number of samples of a wavelet effect block. The duration of this block is derived from the sampling frequency of the channel. This property is required when band_type is equal to "WaveletWave". The value shall be greater than 16 and be a power of 2. | Conditional |
| lower_frequency_limit | number | N/A | Lower frequency limit of the band (Hz). The value should be in the range [0,10000]. | Yes |
| upper_frequency_limit | number | N/A | Indicates the upper frequency limit of the band (Hz). The value should be in the range [0,10000]. | Yes |
| pdf | enum<string> | N/A | Probability Density Function that describes the probabilistic space of the haptic data. Possible values are described in Table 3. | No |
| effects | array<MPEG_haptics_effect> | N/A | List of MPEG_haptics.effect values as described in *ISO/IEC 23090-31*, sec. 6.2.9. If the effects array is empty, the band does not contain haptic data. | Yes |

Table 20 shows the second implementation of the MPEG_haptics.band object.

**Table 20.**

| Property | Type | Default | Description | Required |
|---|---|---|---|---|
| band_type | enum<string> | N/A | Indicates the type of data contained in the band as described in *ISO/IEC 23090-31,* sec. 5.7.<br>Possible values are:<br>"WaveletWave"<br>"VectorialWave"<br>"Curve"<br>"Transient" | Yes |
| priority | integer | 255 | Importance of the band for scalability. A lower value indicates higher priority. The value shall be equal to or greater than zero. Given a limited bandwidth, decoders may ignore perception with a higher priority value. | No |

(continued)

| Property | Type | Default | Description | Required |
|---|---|---|---|---|
| curve_type | enum<string> | Linear | Indicates the type of interpolation function that should be used by the synthesizer as described in *ISO/IEC 23090-31*, sec. 5.7. Possible values are:<br>"Linear"<br>"Cubic"<br>"Akima"<br>"Bezier"<br>"BSpline"<br>"Unknown" | No |
| block_ length | integer | N/A | Number of samples of a wavelet effect block. The duration of this block is derived from the sampling frequency of the channel. This property is required when band_type is equal to "WaveletWave". The value shall be greater than 16 and be a power of 2. | Conditional |
| lower_ frequency_ limit | number | N/A | Lower frequency limit of the band (Hz). The value should be in the range [0,10000]. | Yes |
| upper_ frequency_ limit | number | N/A | Indicates the upper frequency limit of the band (Hz). The value should be in the range [0,10000]. | Yes |
| pdf flag | boolean | False | Boolean signalling if this haptic experience is using a probabilistic space to define the haptic data. | Yes |
| pdf | enum<string> | N/A | Probability Density Function that describes the probabilistic space of the haptic data. Possible values are described in Table 3. | No |
| effects | array<MPEG_ haptics_effect> | N/A | List of MPEG_haptics.effect values as described in *ISO/IEC 23090-31*, sec. 6.2.9. If the effects array is empty, the band does not contain haptic data. | Yes |

Table 21 shows an implementation of the MPEG_haptics.effect object.

**Table 21.**

| Property | Type | Default | Description | Required |
|---|---|---|---|---|
| id | integer | N/A | ID of an effect. For any effect from the effect library and any "Reference" effect, the value shall be defined and be equal to or greater than zero. For all other effects the property shall not be defined. For any non-"Reference" effect from the effect library , the value shall be unique in the perception. | Conditional |
| effect_type | enum<string> | N/A | Indicates the type of haptic effect. Effect-type value equals one of: "Basis", "Composite" and "Reference" as described in *ISO/IEC 23090-31,* sec. 5.8. | Yes |
| semantic_keywords | string | N/A | Semantic keywords included with the effect. | No |

(continued)

| Property | Type | Default | Description | Required |
|---|---|---|---|---|
| position | integer | N/A | Indicates the temporal or spatial position of the effect according to the perception modalities as described in *ISO/IEC 23090-31*, Table 4. In the case of temporal, position/timescale is the temporal position in seconds. The value shall be equal to or greater than zero. In a band where band_type = "WaveletWave", this property shall only exist for the first effect (and no other). For any other band type, the property is required. | Conditional |
| phase | number | 0 | Phase of the effect for Transient and Vectorial bands. The value should be in the range $[0,2\pi]$. | No |
| base_signal | enum<string> | Sine | Indicates the type of the waveform signal for transient and vectorial wave bands. Possible values are: "Sine" "Square" "Triangle" "SawToothUp" "SawTooth Down" | No |
| composition | array<MPEG_ haptics.effect> | N/A | This attribute may only be used with composite effects. It contains a list of effects. This type of effect does not directly contain keyframes. | No |
| pdf_data | array<number> | N/A | The different parameters used to define the probability density function. The parameters depend on the type of the probability density function used to represent the haptic data. The detail of this property is described in Table 4. | No |
| keyframes | array<MPEG_ haptics. keyframe> | N/A | List of MPEG_haptics.keyframes values as described in *ISO/IEC 23090*-31, sec. 6.2.10. This property is required for basis effects. If the keyframes array is empty, the effect does not contain haptic data. This property shall not exist when band_type="WaveletWave". | No |
| wavelet_stream | string | N/A | Base64 encoding with most significant bit first (conformant to RFC 4648) of the encoded wavelet stream. This property shall exist only when band_type="WaveletWave". The decoding process is described in *ISO/IEC 23090-31,* sec. 8.3.3. | Conditional |

**Single Haptic Effect, Multiple Output Signal Example**

For some embodiments, a single haptic effect description may output different haptic signals. This example is based on the Sixth Method described above. For this example, a haptic experience contains one vibrotactile perception, with one channel, one band, and one effect. This haptic effect is described using 4 keyframes modulated in amplitude and position. In this example, the first 3 keyframes are described using different probabilistic spaces as detailed in Table 22. Table 22 shows example definitions of the probabilistic spaces used for the example haptic effect.

**Table 22.**

| Keyframe | PDF | Data |
|----------|-----|------|
| $K_1$ | 1 (Normal) | [1, 0.6, 0.3, 0, 0, 0.31 |
| $K_2$ | 1 (Normal) | [2, 1, 0, 0, 0, 0.1] |
| $K_3$ | 1 (Normal) | [4, 0.35, 0.1, 0, 0, 0] |

Table 23 shows parsed data for the parameters related to the probabilistic space data used with the example described above. For the 3 keyframes, Table 23 shows how the data parameters are parsed to get the final data of the probabilistic space. The probability density function used is a normal law. The first 2 items of the "Data" list are values corresponding to the $\mu$ parameter. The remaining 4 values correspond to the $\Sigma$ matrix. The same parsing technique may be used for the other probability density functions.

**Table 23.**

| Parameter 1 | Parameter 2 |
|-------------|-------------|
| $\mu = \begin{bmatrix} 1 \\ 0.6 \end{bmatrix}$ | $\Sigma = \begin{bmatrix} 0.3 & 0 \\ 0 & 0.3 \end{bmatrix}$ |
| $\mu = \begin{bmatrix} 2 \\ 1 \end{bmatrix}$ | $\Sigma = \begin{bmatrix} 0 & 0 \\ 0 & 0.1 \end{bmatrix}$ |
| $\mu = \begin{bmatrix} 4 \\ 0.35 \end{bmatrix}$ | $\Sigma = \begin{bmatrix} 0.1 & 0 \\ 0 & 0 \end{bmatrix}$ |

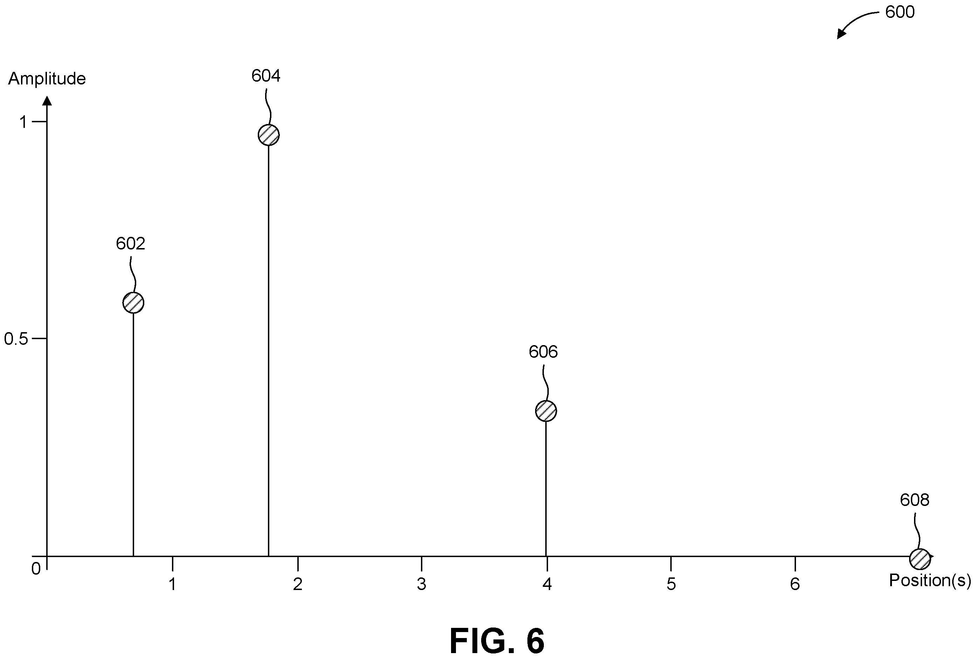

FIG. 6 is a graph illustrating an example 2-dimensional haptic effect. FIG. 6 shows a haptic effect 600 described with four keyframes 602, 604, 606, 608, each having a fixed position and a fixed amplitude.

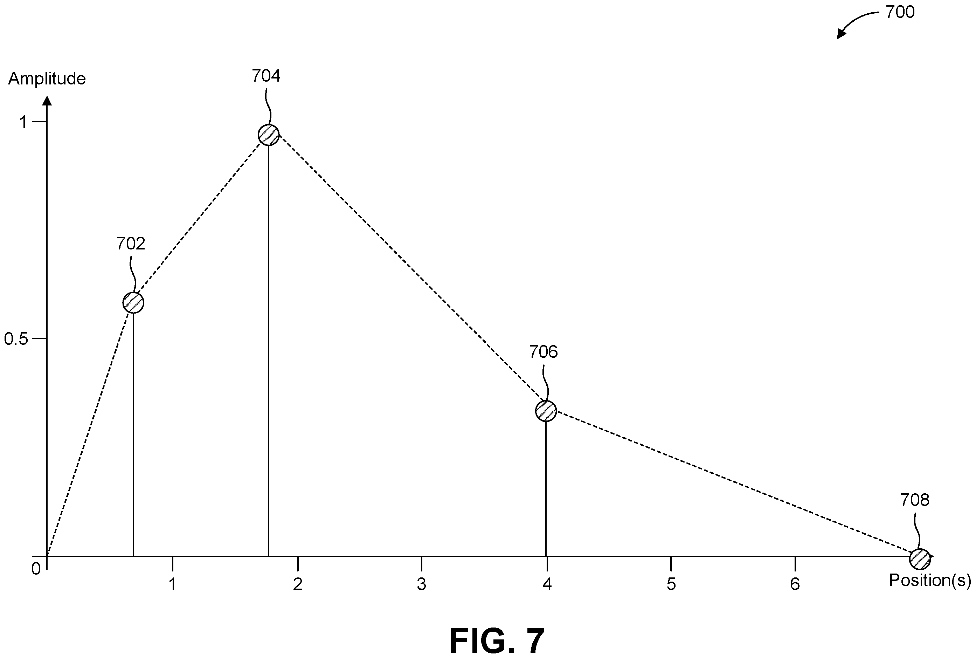

FIG. 7 is a graph illustrating an example rendering of a haptic signal. FIG. 7 shows how a synthesizer generates and renders the haptic signal connecting the keyframess 702, 704, 706, 708 using interpolation. FIG. 7 shows an expected output haptic signal 700 when using determinist keyframes. FIG. 7 shows a possible output of an MPEG synthesizer based on the 4 keyframes of FIG. 6.

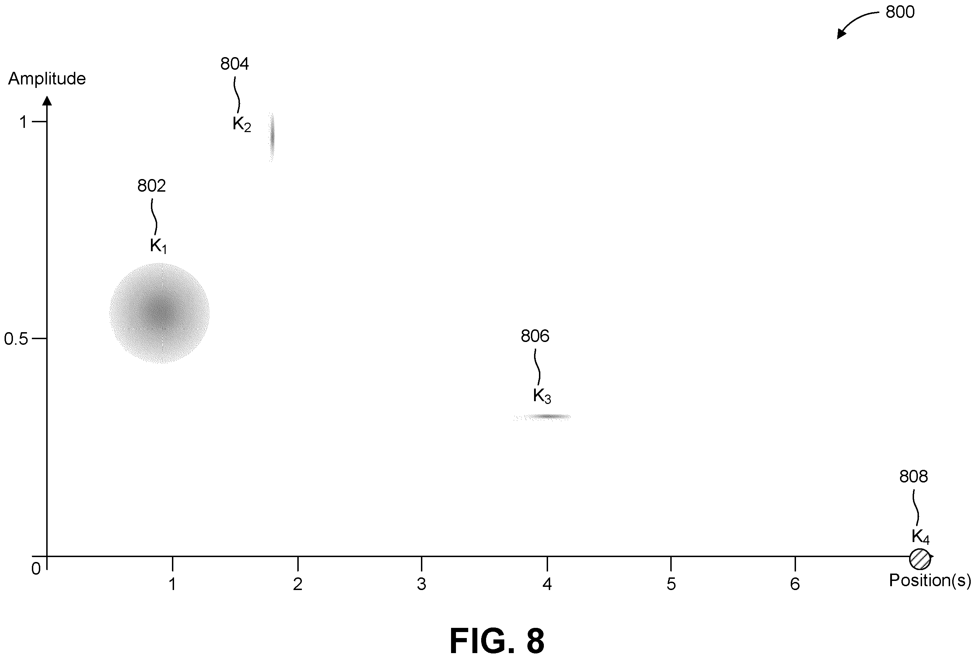

FIG. 8 is a graph illustrating an example haptic effect according to some embodiments. FIG. 8 shows a haptic effect, which is described using four keyframes. The four keyframes 802, 804, 806, 808 are each defined in a 2-dimensional probabilistic space:, one dimension for the position and one dimension for the amplitude. The keyframe $K_1$ (802) is defined using a 2-dimensional probabilistic space 800. One dimension is for position, and one dimension is for amplitude. The keyframe $K_2$ (804) uses a 1-dimension probabilistic space for the amplitude, and the position is fixed. The Keyframe $K_3$ (806) uses a 1-dimension probabilistic space for the position, and the amplitude is fixed. The Keyframe $K_4$ (808) is a simple keyframe as defined in the current version of the MPEG haptic format. Keyframe $K_4$ (808) has fixed values for the position and the amplitude. The corresponding haptic effect is illustrated in the graph 800 of FIG. 8.

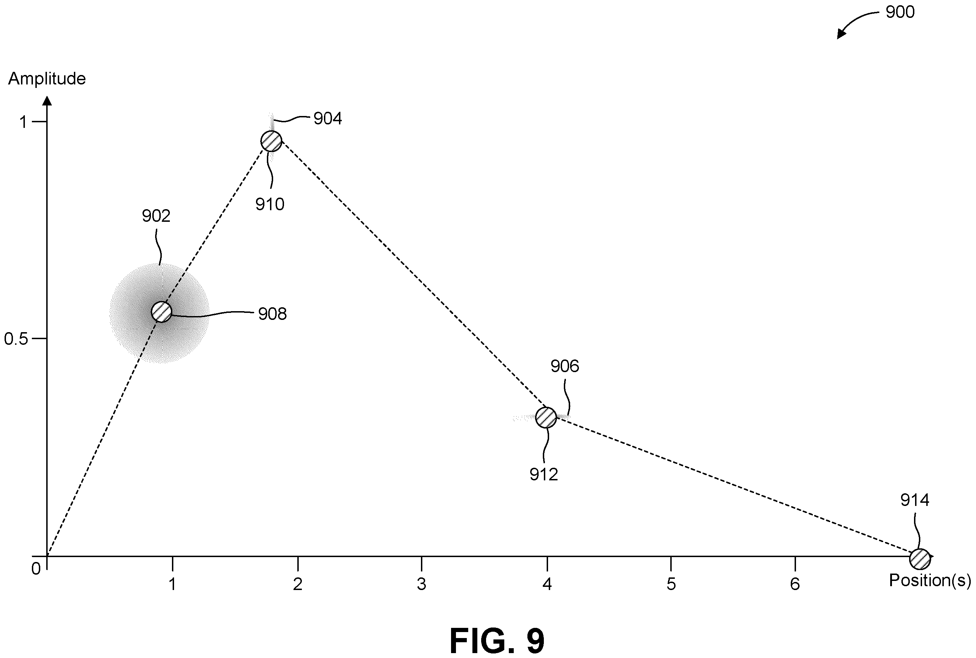

The synthesizer may output an infinite number of haptic signals. For each keyframe, the synthesizer computes the position in time and the amplitude based on the probability density function defined in the structure. In this example, linear interpolation is used. FIGs. 9-11 show different example synthesized signals using the same haptic effect defined using a probabilistic space and described with regard to FIGs. 6-8.

FIG. 9 is a graph illustrating an example first haptic signal output according to some embodiments. Keyframe $K_1$ (902) is defined using a 2-dimensional probabilistic space. One dimension is for position, and one dimension is for amplitude. The keyframe $K_2$ (904) uses a 1-dimension probabilistic space for the amplitude, and the position is fixed. Keyframe $K_3$ (906) uses a 1-dimension probabilistic space for the position, and the amplitude is fixed. Keyframe $K_4$ (908) is a simple keyframe as defined in the current version of the MPEG haptic format. Keyframe $K_4$ (908) has fixed values for the position and the amplitude.

FIG. 9 shows a first synthesized signal corresponding to data points 908, 910, 912, 914. The data points 908, 910, 912 reside near the corresponding keyframes 902, 904, 906. Data point 908 is allowed to vary in both the position and amplitude dimensions. Data point 910 is allowed to vary in the amplitude dimension, while the position dimension is fixed. Data point 912 is allowed to vary in the position dimension, while the amplitude dimension is fixed. The corresponding haptic effect is illustrated in the graph 900.

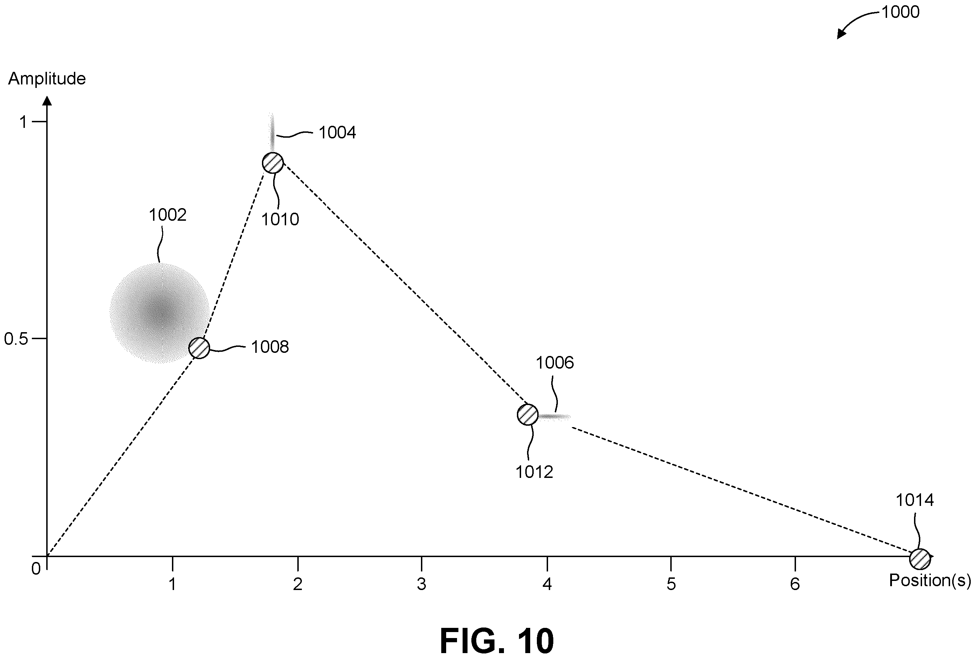

FIG. 10 is a graph illustrating an example second haptic signal output according to some embodiments. The keyframe $K_1$ (1002) is defined using a 2-dimensional probabilistic space. One dimension is for position, and one dimension is for amplitude. The keyframe $K_2$ (1004) uses a 1-dimension probabilistic space for the amplitude, and the position is fixed. The Keyframe $K_3$ (1006) uses a 1-dimension probabilistic space for the position, and the amplitude is fixed. The Keyframe $K_4$ (1008) is a simple keyframe as defined in the current version of the MPEG haptic format. Keyframe $K_4$ (1008) has fixed values for the position and the amplitude.

FIG. 10 shows a second synthesized signal corresponding to data points 1008, 1010, 1012, 1014. The data points 1008, 1010, 1012 reside near the corresponding keyframes 1002, 1004, 1006. Data point 1008 is allowed to vary in both the position and amplitude dimensions. Data point 1010 is allowed to vary in the amplitude dimension, while the position dimension is fixed. Data point 1012 is allowed to vary in the position dimension, while the amplitude dimension is fixed. The corresponding haptic effect is illustrated in the graph 1000.

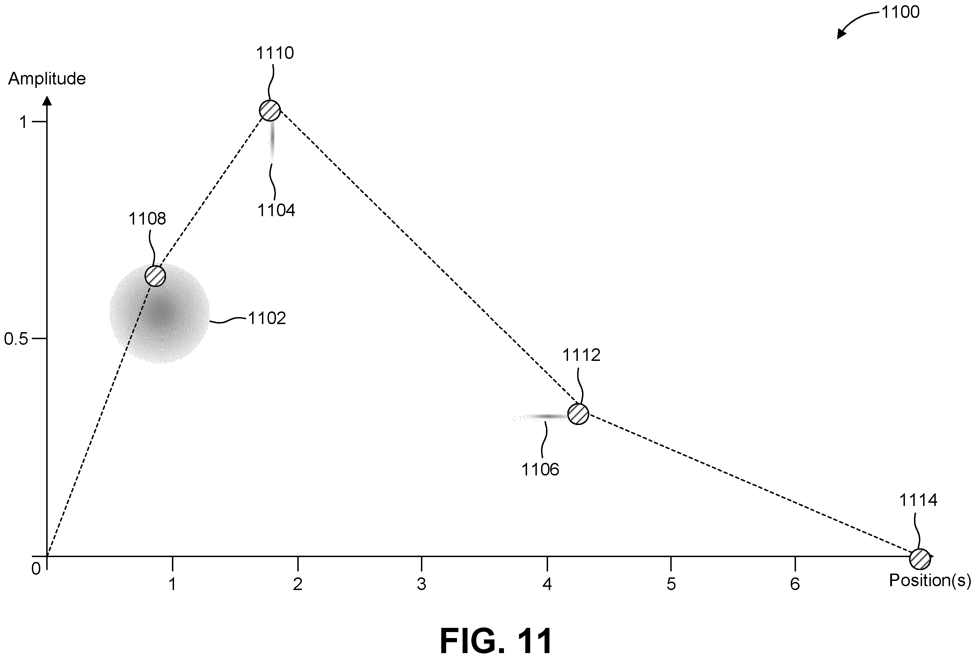

FIG. 11 is a graph illustrating an example third haptic signal output according to some embodiments. The keyframe $K_1$ (1102) is defined using a 2-dimensional probabilistic space. One dimension is for position, and one dimension is for amplitude. The keyframe $K_2$ (1104) uses a 1-dimension probabilistic space for the amplitude, and the position is fixed. The Keyframe $K_3$ (1106) uses a 1-dimension probabilistic space for the position, and the amplitude is fixed. The Keyframe $K_4$ (1108) is a simple keyframe as defined in the current version of the MPEG haptic format. Keyframe $K_4$ (1108) has fixed values for the position and the amplitude.

FIG. 11 shows a third synthesized signal corresponding to data points 1108, 1110, 1112, 1114. The data points 1108, 1110, 1112 reside near the corresponding keyframes 1102, 1104, 1106. Data point 1108 is allowed to vary in both the position and amplitude dimensions. Data point 1110 is allowed to vary in the amplitude dimension, while the position dimension is fixed. Data point 1112 is allowed to vary in the position dimension, while the amplitude dimension is fixed. The corresponding haptic effect is illustrated in the graph 1100.

For some embodiments, this application may be compatible with a current specification and synthesizer through extensions. For some embodiments, devices configured as described in this application may generate an infinite number of signals close to an intended one.

This application references the standard MPEG 137 input document, WD on the Coded Representation of Haptics - Phase 1, ISO/IEC JTC 1/SC 29/WG 2, m58748, MPEG 137, (Jan. 2022).

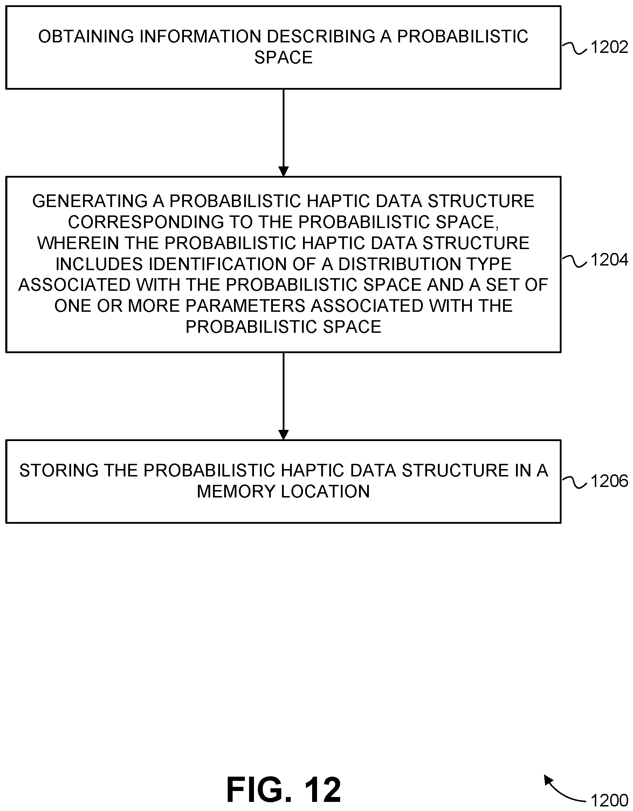

FIG. 12 is a flowchart illustrating an example process for generating a probabilistic haptic data structure according to some embodiments. For some embodiments, an example process 1200 may include obtaining 1202 information describing a probabilistic space. For some embodiments, the example process 1200 may further include generating 1204 a probabilistic haptic data structure corresponding to the probabilistic space, wherein the probabilistic haptic data structure comprises identification of a distribution type associated with the probabilistic space and a set of one or more parameters associated with the probabilistic space. For some embodiments, the example process 1200 may further include storing 1206 the probabilistic haptic data structure in a memory location.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining information describing a probabilistic space; generating a probabilistic haptic data structure corresponding to the probabilistic space, wherein the probabilistic haptic data structure comprises identification of a distribution type associated with the probabilistic space and a set of one or more parameters associated with the probabilistic space; and storing the probabilistic haptic data structure in a memory location.

For some embodiments of the example method, the identification of the distribution type comprises a probabilistic density function (PDF), and the distribution type is one of a set of types comprising continuous uniform, normal, cauchy, exponential, and other.

For some embodiments of the example method, a format of the set of one or more parameters is set based on the probabilistic density function.

For some embodiments of the example method, the probabilistic space applies to a whole MPEG haptic data structure.

For some embodiments of the example method, the probabilistic space applies to a perception level of an MPEG haptic data structure.

For some embodiments of the example method, the probabilistic space applies to a channel level of an MPEG haptic data structure.

For some embodiments of the example method, the probabilistic space applies to a band level of an MPEG haptic data structure.

For some embodiments of the example method, the probabilistic space applies to an effect level of an MPEG haptic data structure.

For some embodiments of the example method, the probabilistic space applies to a keyframe level of an MPEG haptic data structure.

For some embodiments of the example method, the probabilistic space applies to two or more levels of an MPEG haptic data structure.

Some embodiments of the example method may further include synthesizing a haptic signal associated with the probabilistic haptic data structure.

For some embodiments of the example method, the probabilistic haptic data structure is associated with an avatar.

For some embodiments of the example method, the probabilistic haptic data structure complies with a JSON-based structure scheme.

For some embodiments of the example method, the probabilistic haptic data structure complies with an MPEG-based haptic standard.

An example apparatus in accordance with some embodiments may include: a processor; and a memory storing instructions operative, when executed by the processor, to cause the apparatus to perform the any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:

   obtaining information describing a probabilistic space;
   generating a probabilistic haptic data structure corresponding to the probabilistic space,
   wherein the probabilistic haptic data structure comprises identification of a distribution type associated with the probabilistic space and a set of one or more parameters associated with the probabilistic space; and
   storing the probabilistic haptic data structure in a memory location.

2. The method of claim 1,

   wherein the identification of the distribution type comprises a probabilistic density function (PDF), and
   wherein the distribution type is one of a set of types comprising continuous uniform, normal, cauchy, exponential, and other.

3. The method of any one of claims 1-2, wherein a format of the set of one or more parameters is set based on the probabilistic density function.

4. The method of any one of claims 1-3, wherein the probabilistic space applies to a whole MPEG haptic data structure.

5. The method of any one of claims 1-3, wherein the probabilistic space applies to a perception level of an MPEG haptic data structure.

6. The method of any one of claims 1-3, wherein the probabilistic space applies to a channel level of an MPEG haptic data structure.

7. The method of any one of claims 1-3, wherein the probabilistic space applies to a band level of an MPEG haptic data structure.

8. The method of any one of claims 1-3, wherein the probabilistic space applies to an effect level of an MPEG haptic data structure.

9. The method of any one of claims 1-3, wherein the probabilistic space applies to a keyframe level of an MPEG haptic data structure.

10. The method of any one of claims 1-3 wherein the probabilistic space applies to two or more levels of an MPEG haptic data structure.

11. The method of any one of claims 1-10, further comprising synthesizing a haptic signal associated with the probabilistic haptic data structure.

12. The method of any one of claims 1-11, wherein the probabilistic haptic data structure is associated with an avatar.

13. The method of any one of claims 1-12, wherein the probabilistic haptic data structure complies with a JSON-based structure scheme.

14. The method of any one of claims 1-13, wherein the probabilistic haptic data structure complies with an MPEG-based haptic standard.

15. An apparatus comprising:

a processor; and
a memory storing instructions operative, when executed by the processor, to cause the apparatus to perform the method of any one of claims 1 through 14.

FIG. 1

**FIG. 2**

EP 4 733 898 A1

**FIG. 3**

EP 4 733 898 A1

**FIG. 4**

**FIG. 5**

FIG. 6

**FIG. 7**

**FIG. 8**

EP 4 733 898 A1

FIG. 9

FIG. 10

EP 4 733 898 A1

**FIG. 11**

46

OBTAINING INFORMATION DESCRIBING A PROBABILISTIC SPACE ⟲ 1202

GENERATING A PROBABILISTIC HAPTIC DATA STRUCTURE CORRESPONDING TO THE PROBABILISTIC SPACE, WHEREIN THE PROBABILISTIC HAPTIC DATA STRUCTURE INCLUDES IDENTIFICATION OF A DISTRIBUTION TYPE ASSOCIATED WITH THE PROBABILISTIC SPACE AND A SET OF ONE OR MORE PARAMETERS ASSOCIATED WITH THE PROBABILISTIC SPACE ⟲ 1204

STORING THE PROBABILISTIC HAPTIC DATA STRUCTURE IN A MEMORY LOCATION ⟲ 1206

# FIG. 12

1200

**EUROPEAN SEARCH REPORT**

| | Application Number |
|---|---|
| | EP 24 30 6799 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Text of ISO/IEC CD 23090-31 Haptics Coding", 140. MPEG MEETING; 20221024 - 20221028; MAINZ; (MOTION PICTURE EXPERT GROUP OR ISO/IEC JTC1/SC29/WG11), , no. n22111 28 October 2022 (2022-10-28), XP030305001, Retrieved from the Internet: URL:https://dms.mpeg.expert/doc_end_user/d ocuments/140_Mainz/wg11/MDS22111_WG07_N004 49.zip N449-CD_Text_on_Haptics-ISO-IEC 23090-31.docx [retrieved on 2022-10-28] * section 4: Data model * ----- | 1-15 | INV.<br>G06F3/01<br>A63F13/285<br>G06N7/01<br>H04N21/84<br>H04N21/845<br>H04N21/85<br>H04N21/235<br>H04N21/236<br>H04N21/435 |
| A | Anonymous: "rv_continuous - SciPy v1.14.1 Manual", , 8 October 2024 (2024-10-08), pages 1-6, XP093268378, Retrieved from the Internet: URL:https://web.archive.org/web/2024100817 2943/https://docs.scipy.org/doc/scipy/refe rence/generated/scipy.stats.rv_continuous. html [retrieved on 2025-04-08] * the whole document * ----- -/-- | 1-15 | |

| | TECHNICAL FIELDS SEARCHED (IPC) |
|---|---|
| | G06F<br>A63F<br>G06N<br>H04N |

The present search report has been drawn up for all claims

| Place of search | Date of completion of the search | Examiner |
|---|---|---|
| Munich | 8 April 2025 | del Rey, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 6799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IKEMURA SHOHEI ET AL: "Multiple Remote Vibrotactile Noises Improve Tactile Sensitivity of the Fingertip via Stochastic Resonance", IEEE ACCESS, IEEE, USA, vol. 9, 21 January 2021 (2021-01-21), pages 17011-17019, XP011834964, DOI: 10.1109/ACCESS.2021.3053297 [retrieved on 2021-01-28] * abstract * * page 17016 * ----- | 1-15 | |
| A | US 2013/207917 A1 (CRUZ-HERNANDEZ JUAN MANUEL [CA] ET AL) 15 August 2013 (2013-08-15) * paragraph [0041] * ----- | 1-15 | |

| | | | TECHNICAL FIELDS SEARCHED (IPC) |

The present search report has been drawn up for all claims

| Place of search | Date of completion of the search | Examiner |
|---|---|---|
| Munich | 8 April 2025 | del Rey, Marco |

EPO FORM 1503 03.82 (P04C01)

## ANNEX TO THE EUROPEAN SEARCH REPORT
## ON EUROPEAN PATENT APPLICATION NO.

EP 24 30 6799

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2025

| Patent document cited in search report | Publication date | Patent family member(s) | | Publication date |
|---|---|---|---|---|
| US 2013207917 A1 | 15-08-2013 | CN | 103294191 A | 11-09-2013 |
| | | CN | 107688393 A | 13-02-2018 |
| | | EP | 2629178 A1 | 21-08-2013 |
| | | EP | 3321780 A1 | 16-05-2018 |
| | | JP | 6541292 B2 | 10-07-2019 |
| | | JP | 2013168153 A | 29-08-2013 |
| | | JP | 2018026159 A | 15-02-2018 |
| | | KR | 20130094262 A | 23-08-2013 |
| | | US | 2013207917 A1 | 15-08-2013 |
| | | US | 2017045944 A1 | 16-02-2017 |
| | | US | 2019079587 A1 | 14-03-2019 |
| | | US | 2019317603 A1 | 17-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63526954
- US 2024037634 W

**Non-patent literature cited in the description**

- WD on the Coded Representation of Haptics - Phase 1. *ISO/IEC JTC 1/SC 29/WG 2, m58748, MPEG 137*, January 2022